Europäisches Patentamt

European Patent Office

Office européen des brevets

(19)

(11) Veröffentlichungsnummer: **0 387 825**
**A2**

(12) # EUROPÄISCHE PATENTANMELDUNG

(21) Anmeldenummer: **90104794.4**

(51) Int. Cl.⁵: **C04B 16/06, C04B 18/02,**
**C04B 20/10, C08J 5/04**

(22) Anmeldetag: **14.03.90**

(30) Priorität: **17.03.89 DE 3908782**

(43) Veröffentlichungstag der Anmeldung:
**19.09.90 Patentblatt 90/38**

(84) Benannte Vertragsstaaten:
**AT BE CH DE DK ES FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Blauer, Knut**
**Am Flachsland 52**
**D-6233 Kelkheim (Taunus)(DE)**
Erfinder: **Schuster, Ulrich**
**Augsburger Strasse 101**
**D-8400 Regensburg(DE)**

(54) **Beschwerte Verstärkungsfaser und faserverstärkte Baustoffmischung, Verfahren zu deren Herstellung und deren Verwendung.**

(57) Beschrieben werden beschwerte Verstärkungsfasern für eine Baustoffmatrix bestehend aus Stapelfasern, vorzugsweise aus Polyacrylnitril, die pro Einzelfaser mit mindestens einem spezifisch schweren Partikel, insbesondere eines Matrix bestandteils, durch einen Kleber fest verbunden sind sowie eine rieselfähige Baustoffmischung enthaltend diese beschwerten Verstärkungsfasern, die eine hohe Stabilität gegen Entmischung zeigt. Ferner wird angegeben ein Verfahren zur Herstellung dieser Gegenstände und deren Verwendung.

EP 0 387 825 A2

## Beschwerte Verstärkungsfaser und faserverstärkte Baustoffmischung, Verfahren zu deren Herstellung und deren Verwendung

Die vorliegende Erfindung betrifft beschwerte Verstärkungsfasern, die zur Herstellung sich nicht entmischender faserverstärkter Baustoffmischungen geeignet sind, diese Verstärkungsfasern enthaltende Baustoffmischungen und deren Verwendung zur Herstellung bindemittelhaltiger Baustoffmischungen und faserverstärkter Konstruktionen.

Faserverstärkte Konstruktionsmaterialien sind bekannt und weisen besonders vorteilhafte anwendungstechnische Eigenschaften auf. So werden insbesondere Polyacrylnitrilfasern wie z.B. die hochfeste Acrylnitrilfaser [R]Dolanit der Firma Hoechst AG bereits sowohl in Faser-Zementprodukten als auch bei der Herstellung von Reibbelägen eingesetzt. In diesen und anderen Baustoffen, wie z.B. Putz, Mörtel und Beton, werden durch die Polyacrylnitrilfasern z.B. das Biegeverhalten, das Energieaufnahmevermögen sowie die Schwindrißfestigkeit im Vergleich zu den unbewehrten Materialien wesentlich verbessert. Im Zuge der Herstellung dieser faserverstärkten Baustoffe ist es wünschenswert, zunächst einzelne Komponenten der Matrix, die in diesen Baustoffen in einem großen Mengenanteil vorhanden sind, vorab mit den Verstärkungsfasern zu mischen, da eine direkte Einmischung der Fasern aus dem gepreßten Ballen in die komplette Baustoffmatrix in vielen Fällen mit erheblichen Schwierigkeiten verbunden ist. So wäre es z.B. für die Herstellung faserverstärkter Betonmischungen von erheblichem Vorteil, den Faseranteil mit dem in der Mischung verarbeiteten Feinanteilen wie z.B. Sand und Zement, homogen zu mischen, da ein solches Prämix, in welchem die Fasern bereits aufgeschlossen und homogen verteilt sind, vorort mit den gängigen Baustoffmischern leichter zu verarbeiten ist. Es wird daher angestrebt, derartige trockene Faser-Baustoffmischungen in Zukunft verstärkt einzusetzen.

Bei der Herstellung derartiger trockener Faser-Baustoffmischungen ergeben sich jedoch zunächst Probleme beim Einmischen selbst. Aber auch dann, wenn eine homogene Trockenmischung hergestellt ist, entmischt sich diese beim Transport und Umfüllprozessen wieder sehr schnell, weil bei derartigen Ortswechselprozessen der Mischungspartikel die Faser sich an der Oberfläche der Mischung anreichert, was bereits nach kurzer Zeit zu einer völligen Entmischung führen kann. Die Herstellung trockener homogener Faser-Baustoffmischungen, die stabil sind, d.h. sich bei Ortswechselvorgängen der Partikel wie z.B. bei Erschütterungen oder beim Transport nicht mehr entmischen, konnte daher bisher nicht realisiert werden.

Die vorliegende Erfindung überwindet nun diese Nachteile des Standes der Technik und gestattet durch Anwendung erfindungsgemäßer beschwerter Verstärkungsfasern die Herstellung stabiler Faser-Baustoffmischungen.

Die erfindungsgemäßen beschwerten Verstärkungsfasern bestehen aus Stapelfasern, die pro Einzelfaser mit mindestens einem spezifisch schwereren Partikel fest verbunden sind. Spezifisch schwerere Partikel im Sinne der Erfindung sind Einzelkörner oder Agglomerate eines Materials, das spezifisch schwerer ist als das Fasermaterial und dessen Dichte vorzugsweise in etwa der Dichte des zu verstärkenden Matrixmaterials entspricht. Als Fasermaterial für die beschwerten Verstärkungsfasern kommen alle Fasermaterialien in Betracht, soweit sie aufgrund ihrer mechanischen Festigkeiten für Verstärkungszwecke geeignet sind. Je nach dem beabsichtigten Anwendungszweck, d.h. dem zu verstärkenden Matrixmaterial, können natürliche oder synthetische Fasern eingesetzt werden. Im Hinblick auf ihre hohen mechanischen Festigkeiten ist es vorteilhaft, daß als Fasermaterial für die erfindungsgemäßen Verstärkungsfasern synthetische Stapelfasern eingesetzt werden. Besonders bevorzugt sind dabei Typen, die hohe Anfangsmoduli und hohe Endfestigkeiten aufweisen und deren Dehnbarkeit und Haftfestigkeit im Matrixmaterial eine optimale Kraftübertragung zwischen Matrix und Fasern ermöglicht.

Besonders vorteilhaft ist der Einsatz von endgruppenverschlossenen Polyesterfasern oder insbesondere von Polyacrylnitrilfasern, da diese Fasern auch in basischen Matrixmaterialien eine optimale Haltbarkeit aufweisen. Besonders bevorzugt als Fasermaterial für die erfindungsgemäß beschwerten Verstärkungsfasern sind Stapelfasern aus hochfestem Polyacrylnitril wie z.B. die handelsübliche Verstärkungsfaser [R]Dolanit der Firma Hoechst AG.

Die erfindungsgemäß einzusetzenden Stapelfasern weisen Stapellängen von 1 bis 24 mm vorzugsweise 4 bis 8 mm auf und haben Faserdurchmesser von 10 bis 300 $\mu$m. vorzugsweise 30 bis 150 $\mu$m. Die erfindungsgemäßen beschwerten Verstärkungsfasern aus den oben beschriebenen Stapelfasern sind mit 1 bis 30, vorzugsweise im Durchschnitt mit 5 bis 10 spezifisch schwereren Partikeln fest verbunden.

Die spezifisch schwereren Partikel sollen im Gegensatz zu den längsorientierten Stapelfasern eine gleichmäßigere räumliche Ausdehnung haben, d.h. von eher kugelförmiger Gestalt sein. Der Korngrößenbereich der Partikel ist zweckmäßigerweise auf die Dimension der eingesetzten Stapelfaser so abzustimmen, daß das Lückenvolumen einer Schüttung aus diesen Partikeln nicht zu groß gegen die Faserdicke wird. Für die in der Praxis eingesetzten Fasern kommen damit zur Beschwerung Partikel in Betracht, die einen mittleren Durchmesser von 0,1 bis 2 mm, vorzugsweise von 0,3 bis 0,7 mm aufweisen. Dabei kann eine Anpassung der Partikelgröße an die Faserdimension beispielsweise in der Weise erfolgen, daß beispielsweise Fasern vom Durchmesser 104 μm (entsprechend 100 dtex) in allen gängigen Schnittlängen mit spezifisch schwereren Partikeln mit einem Maximalkorn von 2 mm. vorzugsweise mit einer Partikelgrößeverteilung zwischen 300 und 700 μm verbunden sind. Eine handelsübliche Verstärkungsfasertype dieses Durchmessers ist z.B. (R)Dolanit 11.

Als weitere Bemessungsregel für die spezifisch schwereren Partikel gilt, daß sie etwa die Dichte des Korns der mit den Verstärkungsfasern zu verstärkenden Matrix aufweisen. Besonders bevorzugt ist es daher, wenn die spezifisch schwereren Partikel selbst Matrixpartikel sind. Werden die erfindungsgemäß beschwerten Verstärkungsfasern für die Verstärkung von Beton eingesetzt, so ist es besonders zweckmäßig und praktisch, wenn die mit den Stapelfasern verbundenen Partikel im wesentlichen Sandkörner sind.

Die feste Verbindung der Stapelfasern mit den spezifisch schwereren Partikeln kann an sich in jeder bekannten Weise erfolgen, zweckmäßigerweise wird sie durch eine Schmelzverbindung oder eine Klebeverbindung herbeigeführt. Aus technischen Gründen ist es bevorzugt, daß die Verbindung zwischen Faser und spezifisch schwereren Partikeln eine Klebeverbindung ist. Die Natur des Klebstoffs ist von untergeordneter Bedeutung, solange er in der Lage ist, eine ausreichend feste Bindung zwischen den schweren Partikeln und den Stapelfasern herzustellen. Besonders vorteilhaft ist der Einsatz organischer Klebstoffe und aus der Gruppe dieser Klebstoffe sind wiederum diejenigen bevorzugt, die aus wäßrigem Medium appliziert werden, d.h. die in Wasser entweder gelöst oder gequollen vorliegen. Es ist jedoch auch möglich, organische Klebstoffe einzusetzen, deren flüssige Phase im wesentlichen aus einem organischen Löse-oder Quellmittel besteht. Ein gewisser Nachteil dieser Klebemittel liegt jedoch darin, daß das organische Lösungsmittel aus ökologischen und ökonomischen Gründen im Kreislauf geführt werden muß und somit ein erhöhter Herstellungsaufwand erforderlich ist. Von den wasserbasischen organischen Klebstoffen sind solche auf Basis von Zelluloseethern, z.B. Methyl-, Ethyl-, Carboxymethyl- oder Hydroxyethylzellulose oder Zellulose-Mischethern, insbesondere auf Basis von (R)Tylose der Firma Hoechst AG besonders bevorzugt. Als besonders gut geeignet hat sich z.B. die handelsübliche Tylosetype MH 200 K, (Methyl-hydroxyethylzellulose) erwiesen.

Die erfindungsgemäßen, beschwerten Verstärkungsfasern weisen in der Regel, bezogen auf das Gewicht des organischen Fasermaterials, die 15 bis 60-fache, vorzugsweise die 15-bis 40-fache, Gewichtsmenge beschwerende Partikel auf. Ein geringerer Gewichtsanteil beschwerender Partikel ist im Prinzip möglich, kann aber aus Herstellungsgründen zur Bildung ungenügend beschwerter Faseranteile führen. Ein höherer Gewichtsanteil beschwerender Partikel ist ebenfalls möglich, bringt aber kaum mehr Vorteile. In fertigen, rieselfähigen Baustoffmischungen, die einen relativ geringen Faseranteil von z.B. unter 2,5 % aufweisen, können auch höhere Gewichtsanteile beschwerender Partikel an die Faser fixiert sein. Je nach Höhe der Beschwerung weisen die erfindungsgemäßen beschwerten Fasern, soweit die Bindung der Partikel an die Faser eine Klebebindung ist, einen Klebstoffanteil auf, dessen Menge bezogen auf das Gewicht der Beschwerungspartikel bei 0,4 bis 3 Gew.-% liegt.

Gegebenenfalls können auch noch, bezogen auf das Gewicht der beschwerenden Partikel ca. 1 bis 5 Gew.-% eines Auflockerungsmittels wie z.B. Zement oder Kalk vorhanden sein.

Ein weiterer Gegenstand der vorliegenden Erfindung ist eine rieselfähige Baustoffmischung bestehend aus einem Matrixbestandteil und Verstärkungsfasern, die dadurch gekennzeichnet ist, daß sie die oben beschriebenen erfindungsgemäßen beschwerten Verstärkungsfasern enthält, und dadurch bei der Weiterverarbeitung und beim Transport eine drastisch erhöhte Stabilität gegen Entmischung zeigt. Baustoffmischungen im Sinne der vorliegenden Erfindung sind dabei alle im wesentlichen trockenen, rieselfähigen Zusammensetzungen, die für die Herstellung faserverstärkter Formkörper oder für die Herstellung z.B. von faserverstärkten Füll- oder Spachtelmassen geeignet sind. Beispielsweise in Betracht zu ziehen sind hier die Feststoffbestandteile, die mit Duroplastharzen zusammen verpreßt zu hochfesten Bauteilen wie z.B. Bremsbelägen, verarbeitet werden können. Von besonderer Bedeutung sind solche erfindungsgemäße Baustoffmischungen, die zur Herstellung von z.B. Faserputz, Fasermörtel oder Faserbeton auf der Basis von Zement oder organischen Bindemitteln geeignet sind.

In einer solchen bevorzugten Baustoffmischung besteht das Matrixmaterial überwiegend aus Sand und/oder Kies. Je nach vorgesehenem Einsatz und der damit verbundenen Beanspruchung enthält eine solche erfindungsgemäße Baustoffmischung 0,1 bis 7 % organisches Fasermaterial in Form der erfindungsgemäßen beschwerten Verstärkungsfasern. Daneben enthalten derartige erfindungsgemäße Baustoffmischungen in der Regel von der Herstellung her noch geringe Mengen überschüssigen Klebstoffs.

Es hat sich darüber hinaus gezeigt, daß solche erfindungsgemäßen Baustoffmischungen besonders gute Rieselfähigkeit und Klumpfreiheit zeigen, die neben dem Matrixmaterial, den beschwerten Stapelfasern und gegebenenfalls geringen Klebstoffmengen noch einen geringen Anteil eines Auflockerungsmittels enthalten. Als Auflockerungsmittel eignen sich geringe Zusätze von Zement oder Kalk, insbesondere von schnellbindendem Zement (Fix-Zement) oder Trasskaik.

Der Faseranteil in den erfindungsgemäßen Baustoffmischungen ist so zu wählen, daß das Material noch eine ausreichende Rieselfähigkeit behält.

Anwendungstechnisch besonders günstige Zusammensetzungen der erfindungsgemäßen rieselfähigen Baustoffmischungen weisen, bezogen auf das trockene Matrixmaterial z.B. Sand,
0,1 bis 7 Gew.-%, vorzugsweise 2 bis 5 Gew.-% organisches Fasermaterial in Form der beschwerten Fasern, z.B. sandkornbeschwerte (R)-Dolanitfasern,
0,4 bis 3 Gew.-%, vorzugsweise 0,8 bis 1,8 Gew.-% eines organischen Klebemittels, z.B. Tylose und gegebenenfalls
1 bis 5 Gew.-%, vorzugsweise 2 bis 4,0 Gew.-% eines Auflockerungsmittels z.B. Fix-Zement oder Trasskalk auf.

Die oben beschriebenen erfindungsgemäßen beschwerten Verstärkungsfasern werden zweckmäßigerweise hergestellt, indem man 1 - 7 Gewichtsteile, vorzugsweise 2 bis 5 Gewichtsteile der einzusetzenden Stapelfasern in einer Stapellänge von 1 bis 24 mm, vorzugsweise 4 bis 8 mm und mit Faserdurchmessern von 10 bis 300, vorzugsweise 30 bis 150 µm, 0,7 bis 3 Gewichtsteile, vorzugsweise 0,8 bis 1,8 Gewichtsteile eines organischen, vorzugsweise wasserlöslichen oder wasserquellbaren Klebemittels, wie z.B. Tylose,
gegebenenfalls 1,5 bis 5 Gewichtsteile, vorzugsweise 2,0 bis 4 Gewichtsteile eines Auflockerungsmittels wie z.B. Fix-Zement oder Trasskalk mit 100 Gewichtsteilen eines körnigen spezifisch schweren Materials mit einer Korngröße, die je nach Faserdurchmesser o,1 bis 2 mm vorzugsweise 0,3 bis 0,7 mm beträgt, wobei man vorzugsweise als körniges spezifisch schwereres Material einen körnigen Bestandteil der mit den Fasern zu verstärkenden Matrix, wie z.B. Sand, einsetzt und 5 bis 10 Gewichtsteile, vorzugsweise 6 bis 8 Gewichtsteile eines Löse- oder Quellmittels für das organische klebemittel in einem Intensivmischer, vorzugsweise im Schleuderbereich bei Froude-Zahlen von Fr >3 gründlich bis zur Homogenisierung verwirbelt, das so erhaltene Material, gegebenenfalls unter ständiger oder gelegentlicher Weiterbewegung trocknet und das beschwerte Fasermaterial vom Überschuß des körnigen, spezifisch schwereren Materials in an sich bekannter Weise abtrennt. Durch Zurückwiegen des abgetrennten Matrixmaterials kann die exakte Zusammensetzung der erhaltenen, beschwerten Verstärkungsfasern bezüglich Faser-und Matrixanteil bestimmt werden. Vorzugsweise wird bei diesem Verfahren ein wasserlösliches oder wasserquellbares Klebemittel und als Löse- bzw. Quellmittel Wasser eingesetzt. Besonders bevorzugtes wasserlösliches oder wasserquellbares Klebemittel ist Tylose. Es ist ferner bevorzugt, bei der Durchführung dieses Verfahrens, soweit wie technisch möglich, an den oberen Grenzen der angegebenen Gewichtsteil-Bereiche zu arbeiten.

Die Abtrennung der nach diesem Verfahren hergestellten erfindungsgemäßen beschwerten Verstärkungsfasern von dem Überschuß des spezifisch schwereren körnigen Materials (Matrixmaterial) kann beispielsweise durch Absieben erfolgen. Dieser Verfahrensschritt, der zu dem obenbeschriebenen Fasermaterial führt, bei dem die Einzelfasern mit 1 bis 30 spezifisch schwereren Partikeln (z.B. Matrixkörnern) verbunden sind, und der bei der Herstellung eingesetzte Überschuß des körnigen Materials praktisch vollständig wieder entfernt wird, ist nur dann zweckmäßig, wenn die so hergestellten Fasern selbst benötigt werden, z.B. weil sie über eine weite Strecke transportiert und dann erst für die Herstellung faserverstärkter Matrixmaterialien eingesetzt werden sollen. In einem solchen Fall, können durch die Isolierung des beschwerten Fasermaterials Transportkosten eingespart werden.

Mit den isolierten beschwerten Verstärkungsfasern können in der Regel auch Baustoffe verstärkt werden, deren Matrixmaterial nicht identisch ist mit den an die Fasern gebundenen Beschwerungspartikeln.

Sind jedoch lange Transportwege nicht erforderlich, so ist es weitaus zweckmäßiger, die erfindungsgemäße beschwerte Fasern enthaltenden Baustoffmischungen direkt herzustellen, indem man 100 Gewichtsteile des körnigen Matrixmaterials, 0,1 bis 7 Gewichtsteile, vorzugsweise 2 bis 5 Gewichtsteile der zur Verstärkung benutzten Stapelfasern, 0,4 bis 3 Gewichtsteile, vorzugsweise 0,8 bis 1,8 Gewichtsteile eines organisches Klebemittels, gegebenenfalls 1 bis 5 Gewichtsteile, vorzugsweise 2 bis 4,0 Gewichtsteile eines Auflockerungsmittels und 5 bis 10 Gewichtsteile, vorzugsweise 6 bis 8 Gewichtsteile eines Löse- oder Quellmittels für das organische Klebemittel in einen Intensivmischer, vorzugsweise im Schleuderbereich bei Froude-Zahlen von Fr >3 gründlich bis zur Homogenisierung verwirbelt und das erhaltene Material, gegebenenfalls unter ständiger oder gelegentlicher Weiterbewegung, trocknet. Bevorzugte Ausführungsformen dieses Verfahrens sind solche, bei denen die oben beschriebenen bevorzugten Fasern und/oder bevorzugten Klebemittel mit den dazu passenden bevorzugten Löse- oder Quellmittel und/oder bevorzugte Auflockerungsmittel eingesetzt werden. Im Rahmen der obigen Zusammensetzungsgrenzen wird der Faseranteil je nach Fasertyp (Faserdicke und Faserlänge) so optimiert, daß nach der Bindung einzelner Matrixkörner oder Agglomerate an die Fasern, noch eine ausreichende Rieselfähigkeit der Mischung gewährleistet ist. Für den bevorzugten Fasertyp [R]Dolanit 11 mit einem Faserdurchmesser von 104 $\mu$m (entsprechend 100 dtex) und einer Faserlänge von 6 mm, liefert beispielsweise ein Faseranteil von 5 Gew.-% bezogen auf die trockene Baustoffmasse gute Ergebnisse. Der Korngrößenbereich des Matrixmaterials und der Fasertyp werden vorzugsweise ebenfalls aufeinander abgestimmt. Wie bereits oben gesagt, sollte das Lückenvolumen der Schüttung hierbei nicht zu groß gegen die Faserdicke werden. Für den besonders bevorzugten Fasertyp [R]Dolanit 11 in allen Schnittlängen sind z.B. Matrixschüttungen mit einem Maximalkorn von 2 mm geeignet. Vorzugsweise sollte die Partikelgrößenverteilung zwischen 300 und 700 $\mu$m liegen. Als Klebemittel für die Bindung zwischen den organischen Fasern und einzelnen Matrixkörnern wird vorzugsweise Tylose eingesetzt. Ein höherer Tyloseanteil als der oben angegebene kann nach dem Trocknen zu Agglomeraten der Baustoffmischung führen. Auch ist es zweckmäßig, die Agglomerierneigung der Tylose durch den Zusatz eines Auflockerungsmittels zurückzudrängen. Die Zugabe solcher Mittel, wie z.B. Zement oder Trass-Kalk hält die Schüttung bei ausreichender Bindung zwischen Fasern und Matrixkörnern locker. Zuviel Zement verhindert jedoch die Tylosebindung. Der Zementanteil sollte daher vorzugsweise zwischen 2 bis 4 Gew.-% liegen. Bei Einsatz von Tylose als Klebemittel muß der Wasseranteil nur so hoch sein, daß die Mischung vor dem Trocknen leicht feucht erscheint. Selbstverständlich gilt das gleiche bei Einsatz anderer organischer Klebemittel für die dazugehörenden flüssigen Löse- oder Quellmittel.

Die erfindungsgemäßen beschwerten Verstärkungsfasern sowie die erfindungsgemäßen, beschwerte Verstärkungsfasern enthaltenden Baustoffmischungen eignen sich hervorragend zur Herstellung von bindemittelhaltigen Baustoffmischungen, z.B. von Putz, Mörtel oder Beton unter Einsatz anorganischer Bindemittel wie Zement oder organischer Bindemittel (PCC-Harze) z.B. auf der Basis von Polyestern oder insbesondere von Epoxidharzen. Bevorzugt werden die erfindungsgemäßen Baustoffmischungen zur Herstellung von Zementbeton eingesetzt.

Das folgende Ausführungsbeispiel veranschaulicht die Herstellung einer erfindungsgemäßen Baustoffmischung mit einem Gehalt an erfindungsgemäßen beschwerten Verstärkungsfasern.

100 Gewichtsteile Quarzsand mit einem Korngrößenbereich $d_{10}$ = 200 $\mu$m, $d_{50}$ = 300 $\mu$m, $d_{90}$ = 450 $\mu$m, 2 Gewichtsteile einer hochfesten Polyacrylnitril Stapelfaser von 100 dtex (Durchmesser 104 $\mu$) mit einer Stapellänge von 6 mm Länge ([R]-Dolanit 11 der Firma Hoechst AG), 1 Gewichtsteil Tylose Typ MH-200K der Firma Hoechst AG, 3,3 Gewichtsteile Fix-Zement und 6,7 Gewichtsteile Wasser werden in einem Intensivmischer (z.B. Eirich-Intensivmischer) homogen vermischt. Es ist dabei darauf zu achten, daß der Mischer das Mischgut gut aufwirbelt, um Raum für die Einlagerung der längsorientierten Fasern in die kugelförmigen Matrixbestandteile zu schaffen. Zweckmäßigerweise wird der Mischer so betrieben, daß er im Schleuderbereich bei Froude-Zahlen Fr>3 arbeitet.

Die Stapelfasern können dabei unvereinzelt zugegeben werden.

Nach ausreichender Homogenisierung wird das Material dem Mischer entnommen und vorzugsweise bei 40 bis 100$^\circ$C getrocknet. Die so hergestellte Baustoffmischung enthält die erfindungsgemäßen beschwerten Stapelfasern, wobei die Einzelfasern durch angeklebte Matrixkörner so beschwert sind, daß sie auch bei Transport und Umfüllen der Mischung homogen in der Schüttung verteilt bleiben. Die Bindung der spezifisch schweren Matrixpartikel an die Fasern ist so fest, daß sie den Beanspruchungen bei üblichen Transport-und Umfüllprozessen der Baustoffmischung standhält.

## Ansprüche

1. Beschwerte Verstärkungsfasern bestehend aus Stapelfasern, die pro Einzelfaser mit mindestens einem spezifisch schwereren Partikel fest verbunden sind.

2. Beschwerte Verstärkungsfasern gemäß Anspruch 1, dadurch gekennzeichnet, daß die Stapelfasern endgruppenverschlossene Polyesterfasern oder Polyacrylnitrilfasern sind.

3. Beschwerte Verstärkungsfasern gemäß mindestens einem der Ansprüche 1 oder 2, dadurch gekennzeichnet, daß die Stapelfasern hochfeste Polyacrylnitrilfasern sind.

4. Beschwerte Verstärkungsfasern gemäß mindestens einem der Ansprüche 1 bis 3, dadurch gekennzeichnet, daß die Stapelfasern pro Einzelfaser mit 1 bis 30, vorzugsweise 5 bis 10 spezifisch schwereren Partikeln verbunden sind.

5. Beschwerte Verstärkungsfasern gemäß mindestens einem der Ansprüche 1 bis 4, dadurch gekennzeichnet, daß die Verbindung zwischen Faser und Partikel eine Schmelzverbindung oder eine Klebeverbindung ist.

6. Beschwerte Verstärkungsfasern gemäß mindestens einem der Ansprüche 1 bis 5, dadurch gekennzeichnet, daß die Klebeverbindung durch einen organischen, vorzugsweise wasserbasischen Klebstoff erzielt ist.

7. Beschwerte Verstärkungsfasern gemäß mindestens einem der Ansprüche 1 bis 6, dadurch gekennzeichnet, daß die spezifisch schwereren Partikel Partikel der zu verstärkenden Matrix sind.

8. Rieselfähige Baustoffmischung bestehend aus einem Matrixbestandteil und Verstärkungsfasern, dadurch gekennzeichnet, daß sie die beschwerten Verstärkungsfasern des Anspruchs 1 enthält und daß sie eine hohe Stabilität gegen Entmischung zeigt.

9. Baustoffmischung gemäß Anspruch 8, dadurch gekennzeichnet, daß sie 0,1 bis 7 % organisches Fasermaterial in Form der beschwerten Verstärkungsfasern des Anspruchs 1 enthält.

10. Baustoffmischung gemäß mindestens einem der Ansprüche 8 und 9, dadurch gekennzeichnet, daß sie, bezogen auf das trockene Matrixmaterial,

0,1 bis 7 Gew.-% organisches Fasermaterial in Form der beschwerten Fasern des Anspruchs 1

0,4 bis 3 Gew.-% eines organischen Klebemittels, und gegebenenfalls

1 bis 5 Gew.-% eines Auflockerungsmittels aufweist.

11. Baustoffmischung gemäß mindestens einem der Ansprüche 8 bis 10, dadurch gekennzeichnet, daß sie als organisches Fasermaterial hochfeste Polyacrylnitrilfasern enthält.

12. Baustoffmischung gemäß mindestens einem der Ansprüche 8 bis 11, dadurch gekennzeichnet, daß sie als organisches Klebemittel ein wasserlösliches oder wasserquellbares Klebemittel, vorzugsweise Tylose enthält.

13. Baustoffmischung gemäß mindestens einem der Ansprüche 8 bis 12, dadurch gekennzeichnet, daß sie als Auflockerungsmittel Zement oder Trasskalk enthält.

14. Verfahren zur Herstellung der beschwerten Verstärkungsfasern des Anspruchs 1, dadurch gekennzeichnet, daß man 1 bis 7 Gewichtsteile Stapelfasern in einer Stapellänge von 1 bis 24 mm und mit einem Faserdurchmesser von 30 bis 300 μm, 0,7 bis 3 Gewichtsteile eines organischen Klebemittels

gegebenenfalls 1,5 bis 5 Gewichtsteile eines Auflockerungsmittels mit 100 Gewichtsteilen eines körnigen, spezifisch schwereren Matrials mit einer Korngröße von 0,1 bis 2 mm und

5 bis 10 Gewichtsteile eines Löse- oder Quellmittels für das organische Klebemittel

in einem Intensivmischer, gründlich bis zur Homogenisierung verwirbelt, das Material, gegebenenfalls unter Weiterbewegung, trocknet und das beschwerte Fasermaterial vom Überschuß des körnigen spezifisch schwereren Materials in an sich bekannter Weise abtrennt.

15. Verfahren zur Herstellung einer Baustoffmischung des Anspruchs 8, dadurch gekennzeichnet, daß man 100 Gewichtsteile eines Matrixmaterials, 0,1 bis 7 Gewichtsteile eines organischen Fasermaterials, 0,4 bis 3 Gewichtsteile eines organischen Klebemittels, gegebenenfalls 1 bis 5 Gewichtsteile eines Auflockerungsmittels und 6 bis 8 Gewichtsteile eines Löse- oder Quellmittels für das organische Klebemittel in einem Intensivmischer gründlich bis zur Homogenisierung verwirbelt und das Material, gegebenenfalls unter ständiger Weiterbewegung, trocknet.

16. Verfahren gemäß einem der Ansprüche 14 oder 15, dadurch gekennzeichnet, daß als organisches Fasermaterial hochfeste Polyacrylnitril-Stapelfasern eingesetzt werden.

17. Verfahren gemäß einem der Ansprüche 14 oder 15, dadurch gekennzeichnet, daß ein wasserlösliches oder wasserquellbares Klebemittel und als Löse- bzw. Quellmittel für das Klebemittel Wasser eingesetzt wird.

18. Verfahren gemäß einem der Ansprüche 14 oder 15, dadurch gekennzeichnet, daß als Klebemittel Tylose eingesetzt wird.

19. Verfahren gemäß einem der Ansprüche 14 oder 15, dadurch gekennzeichnet, daß als Auflockerungsmittel Zement oder Trasskalk eingesetzt wird.

20. Verwendung der beschwerten Verstärkungsfasern des Anspruchs 1 zur Herstellung von bindemittelfreien und bindemittelhaltigen Baustoffmischungen.

21. Verwendung der Baustoffmischungen des Anspruchs 8 zur Herstellung bindemittelhaltiger Baustoffmischungen.